# EUROPEAN PATENT APPLICATION

(11) **EP 1 885 148 A1**
(43) Date of publication of application: **06.02.2008**
(21) Application number: 06746171.5
(22) Date of filing: 09.05.2006
(51) Int. Cl.: H04Q 7/38

(54) **TRANSMITTING/RECEIVING DEVICE, COMMODITY SERVICE TRANSACTION SYSTEM, TRANSMITTER DEVICE, AND RECEIVER DEVICE**

(30) Priority: 10.05.2005 JP 2005137126
(71) Applicant: The University of Tokyo, Bunkyo-Ku, Tokyo 113-8654 (JP)
(72) Inventor: MORIKAWA, Hiroyuki, The University of Tokyo, Tokyo 113-8654 (JP); AOYAMA, Tomonori, The University of Tokyo, Tokyo 113-8654 (JP); SARUWATARI, Syunsuke, The University of Tokyo, Tokyo 113-8654 (JP); POUPYREV, Pavel, The University of Tokyo, Tokyo 113-8654 (JP)
(74) Representative: Kuhnen & Wacker
(86) International application number: PCT/JP2006/309340
(87) International publication number: WO 2006/121053

(57) **Abstract**

In a commodity and service trading system, a client computer 60 receives an input window from a Web server 70 connected via the Internet 72 for the user's entry of transaction data regarding a trade of commodity or service. The user's entry of transaction data on the input window is registered in the form of a user data table into a memory 33 of a transreceiver 20 (transreceiver main body 30). The transreceiver 20 enables delivery of the transaction data registered in the user data table, in parallel with reception of transaction data from another transreceiver 20B or 20C. When a commodity or service option set as an object trade and transaction conditions required for the object trade in the received transaction data match with the commodity or service option and the transaction conditions in the transaction data registered in the user data table, the received transaction data is registered in the form of a receiving data table into the memory 33. In response to the registry in the receiving data table, an alert is output in a specific alert pattern to an alert device 40 or a cellular phone 80 connected to the transreceiver 20.

## Description

### Technical Field

The present invention relates to a portable transreceiver used in a commodity and service trading system that allows transmission and reception of transaction data regarding trades of commodities and services between multiple transreceivers, as well as to the commodity and service trading system and a transmitter and a receiver used in the commodity and service trading system.

### Background Art

One typical example of the commodity and service trading system is a net auction system for sales and purchases of commodities on a network (see, for example, Patent Document 1). In the net auction system, each auctioneer posts the auctioneer's information and commodity information in an auction site provided by a Web server and waits for bidding. The highest bidder in a preset bidding time wins the bid for the commodity and makes contact with the auctioneer to perform a transaction.
Patent Document 1: Japanese Patent Laid-Open No. 2003-242383

### Disclosure of the Invention

In the commodity and service trading system, the auctioneer and the bidder are respectively required to place the commodity on the auction site and to make a bid for the commodity through the Web server. The inexperienced beginner user has difficulty in the rather complicated processing. This may lead to an unsmooth transaction of the commodity. This problem is not characteristic of trading of commodities but is also found in trading of services.

In the transreceiver, the commodity and service trading system, and the transmitter and the receiver used in the commodity and service trading system, there is accordingly a demand of ensuring smooth trading of a commodity or a service.

At least part of the above and the other related objects is attained by a transreceiver, commodity and service trading system, and transmitter and receiver used therein of the invention having the configurations discussed below.

According to one aspect, the present invention is directed to a transreceiver portably used in a commodity and service trading system that allows transmission and reception of transaction data regarding a trade of commodity or service between multiple transreceivers. The transreceiver includes: a data storage module that stores data including a transreceiver user's transaction data; a data transmitting and receiving module that utilizes electromagnetic wave in a predetermined frequency band to send and receive data; and a transmit-receive control module that controls the data transmitting and receiving module to enable transmission of the transreceiver user's transaction data stored in the data storage module to another transreceiver, in parallel with reception of another transreceiver user's transaction data that is sent from the another transreceiver and is related to the transreceiver user's transaction data stored in the data storage module.

In the commodity and service trading system that allows transmission and reception of transaction data regarding a trade of commodity or service between the multiple transreceivers, the transreceiver according to this aspect of the invention stores the data including the transreceiver user's transaction data into the data storage module. The transreceiver controls the data transmitting and receiving module that utilizes the electromagnetic wave in the predetermined frequency band to send and receive data. Such control enables transmission of the transreceiver user's transaction data stored in the data storage module to another transreceiver, in parallel with reception of the another transreceiver user's transaction data that is sent from the another transreceiver and related to the transreceiver user's transaction data stored in the data storage module. This arrangement enables parallel transmission and reception of the relevant transaction data between the multiple transreceivers, thus ensuring smooth trading of a commodity or a service.

In one preferable application of the transreceiver according to one aspect of the invention, the data storage module stores at least trade option data representing a commodity option or a service option as an object trade and condition data representing transaction conditions required for the object trade, as the transreceiver user's transaction data. The transreceiver further has a transaction data registration module that registers the another transreceiver user's transaction data received from the another transreceiver by means of the data transmitting and receiving module, into the data storage module, when any at least partly matching transaction data having identical trade option data and at least partly matching condition data with those of the another transreceiver user's transaction data is present among the transreceiver user's transaction data stored in the data storage module. This arrangement enables registration of only the relevant transaction data among the another transreceiver user's transaction data. In the transreceiver of this application, upon previous registration of the another transreceiver user's transaction data in the data storage module, the transaction data registration module does not make duplicate registration of the another transreceiver user's transaction data, even when any at least partly matching transaction data having identical trade option data and at least partly matching condition data with those of the another transreceiver user's transaction data is present among the transreceiver user's transaction data stored in the data storage module. This arrangement effectively prevents duplicate registry of the same transaction data.

In one preferable embodiment of the transreceiver equipped with the transaction data registration module, the transreceiver further has an information module that notifies the transreceiver user of registration of the another transreceiver user's transaction data by the transaction data registration module. The user is thus immediately informed of registry of the received transaction data. In the transreceiver of this embodiment, it is preferable that the information module notifies the transreceiver user of registration of the another transreceiver user's transaction data in a unique notification pattern intrinsically set for each of the transreceiver user's stored transaction data corresponding to the another transreceiver user's transaction data received from the another transreceiver as a registry object or for trade option data of the each stored transaction data. This enables the user to roughly identify the registered transaction data.

In another preferable embodiment of the transreceiver equipped with the transaction data registration module, the transreceiver further has a connection module that is connectable with a predetermined portable device to display content of the another transreceiver user's transaction data registered by the transaction data registration module, on a monitor screen of the predetermined portable device. The user carrying the predetermined portable device with the transreceiver is immediately informed of the content of the registered transaction data. The 'predetermined portable device' may be, for example, a cellular phone or a personal digital assistant.

In another preferable application of the transreceiver according to one aspect of the invention, the data storage module stores the transreceiver user's transaction data with setting of either a permission or a refusal for data transmission. The transmit-receive control module sends only transaction data with the setting of a permission for data transmission among the transreceiver user's transaction data stored in the data storage module. This arrangement effectively prevents transmission of the transaction data to the unspecified number of people against the user's intention.

According to another aspect, the present invention is directed to a commodity and service trading system that allows transmission and reception of transaction data regarding a trade of commodity or service between multiple transreceivers. Each of the multiple transreceivers has: a data storage module that stores data including a transreceiver user's transaction data; a data transmitting and receiving module that utilizes electromagnetic wave in a predetermined frequency band to send and receive data; and a transmit-receive control module that controls the data transmitting and receiving module to enable transmission of the transreceiver user's transaction data stored in the data storage module to another transreceiver, in parallel with reception of another transreceiver user's transaction data that is sent from the another transreceiver and is related to the transreceiver user's transaction data stored in the data storage module. The commodity and service trading system includes: a server that manages an input form for a user's entry of transaction data; and a client computer that is connected with the server via a network, receives the input form from the server, accepts the user's entry of transaction data on the received input form, and stores the accepted transaction data into the data storage module of the transreceiver.

In the commodity and service trading system according to this aspect of the invention, the transreceiver stores the transreceiver user's transaction data, which regards a trade of commodity or service and is to be sent and received between the multiple transreceivers, into the data storage module. The transreceiver controls the data transmitting and receiving module that utilizes the electromagnetic wave in the predetermined frequency band to send and receive data. Such control enables transmission of the transreceiver user's transaction data stored in the data storage module to another transreceiver, in parallel with reception of the another transreceiver user's transaction data that is sent from the another transreceiver and related to the transreceiver user's transaction data stored in the data storage module. The client computer receives the input form for the user's entry of transaction data from the server connected via the network, accepts the user's entry of transaction data on the received input form, and stores the accepted transaction data into the data storage module of the transreceiver. The use of this input form enables the user's transaction data to be readily stored into the data storage module of the transreceiver. The transmission of the transaction data between the multiple transreceivers ensures the smoother trading of a commodity or a service.

According to still another aspect, the present invention is directed to a transmitter portably used in a commodity and service trading system that allows transmission and reception of transaction data regarding a trade of commodity or service between the transmitter and a receiver. The transmitter has: a data storage module that stores data including a transmitter user's transaction data; a data transmitting module that utilizes electromagnetic wave in a predetermined frequency band to send data; and a transmit control module that controls the data transmitting module to send the transmitter user's transaction data stored in the data storage module to the receiver at a predetermined timing. The receiver has: a data storage module that stores data including a receiver user's transaction data; a data receiving module that receives the data sent on the electromagnetic wave in the predetermined frequency band; a receive control module that controls the data receiving module to receive the transmitter user's transaction data sent at the predetermined timing by the transmitter; and a transaction data registration module that registers the transmitter user's received transaction data into the data storage module of the receiver, when the transmitter user's received transaction data is related to any of the receiver user's transaction data stored in the data storage module of the receiver.

In the commodity and service trading system that allows transmission and reception of transaction data regarding a trade of commodity or service between the transmitter and the receiver, the transmitter controls the data transmitting module to send the transmitter user's transaction data, which is stored in the data storage module, on the electromagnetic wave in the predetermined frequency band to the receiver at the predetermined timing. The receiver controls the data receiving module to receive the transmitter user's transaction data sent on the electromagnetic wave in the predetermined frequency band at the predetermined timing by the transmitter. The transmitter user' s received transaction data is stored into the data storage module of the receiver, when the transmitter user's received transaction data is related to any of the receiver user's transaction data stored in the data storage module of the receiver. This arrangement enables direct transmission of the relevant transaction data between the transmitter and the receiver, thus ensuring the smoother trading of a commodity or a service.

According to still another aspect, the present invention is directed to a receiver portably used in a commodity and service trading system that allows transmission and reception of transaction data regarding a trade of commodity or service between the transmitter and a receiver. The transmitter has: a data storage module that stores data including a transmitter user's transaction data; a data transmitting module that utilizes electromagnetic wave in a predetermined frequency band to send data; and a transmit control module that controls the data transmitting module to send the transmitter user's transaction data stored in the data storage module to the receiver at a predetermined timing. The receiver has: a data storage module that stores data including a receiver user's transaction data; a data receiving module that receives the data sent on the electromagnetic wave in the predetermined frequency band; a receive control module that controls the data receiving module to receive the transmitter user's transaction data sent at the predetermined timing by the transmitter; and a transaction data registration module that registers the transmitter user's received transaction data into the data storage module of the receiver, when the transmitter user's received transaction data is related to any of the receiver user's transaction data stored in the data storage module of the receiver.

In the commodity and service trading system that allows transmission and reception of transaction data regarding a trade of commodity or service between the transmitter and the receiver, the receiver controls the data transmitting module to send the transmitter user' s transaction data, which is stored in the data storage module, on the electromagnetic wave in the predetermined frequency band to the receiver at the predetermined timing. The receiver controls the data receiving module to receive the transmitter user's transaction data sent on the electromagnetic wave in the predetermined frequency band at the predetermined timing by the transmitter. The transmitter user's received transaction data is stored into the data storage module of the receiver, when the transmitter user's received transaction data is related to any of the receiver user's transaction data stored in the data storage module of the receiver. This arrangement enables direct transmission of the relevant transaction data between the transmitter and the receiver, thus ensuring the smoother trading of a commodity or a service.

### Brief Description of the Drawings

Fig. 1 schematically illustrates the configuration of a commodity and service trading system 10 in one embodiment of the invention;
Fig. 2 is a perspective view showing the appearance of a transreceiver 20 used in the commodity and service trading system 10 of the embodiment;
Fig. 3 is a perspective view showing the appearance of the transreceiver 20 of Fig. 2 with detachment of an alert device 40 from a transreceiver main body 30;
Fig. 4 shows one example of a data input form;
Fig. 5 shows one example of a subsequent data input form;
Fig. 6 shows an example of data registered in a user data table;
Fig. 7 is a flowchart showing a data delivery process;
Fig. 8 is a flowchart showing a data receiving process;
Fig. 9 shows an example of data registered in a receiving data table; and
Fig. 10 shows display of the content of transaction data registered in the receiving data table on a monitor screen of a cellular phone 80.

### Best Modes of Carrying Out the Invention

One mode of carrying out the invention is described below as a preferred embodiment with reference to the accompanied drawings.

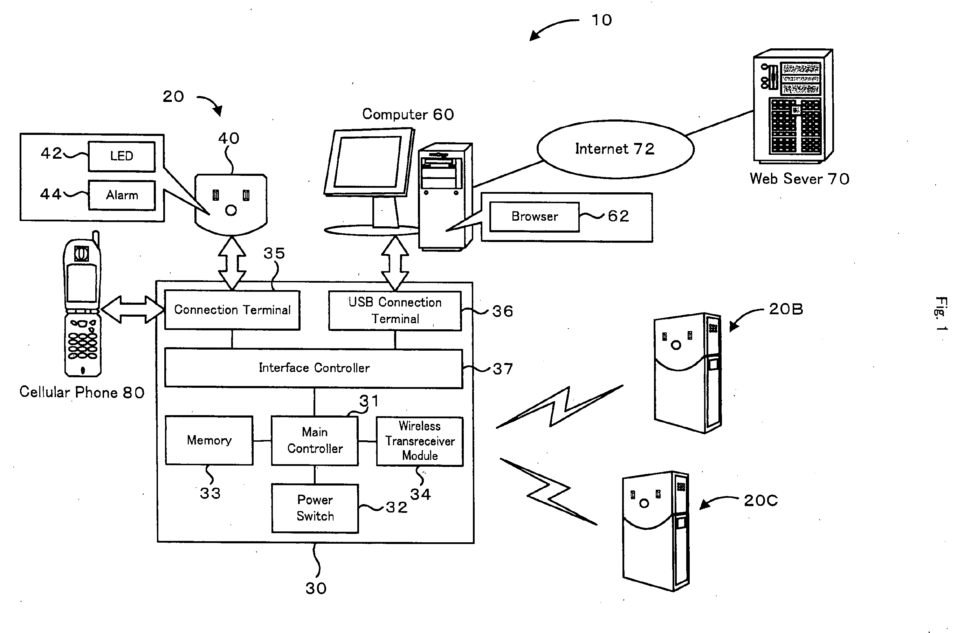

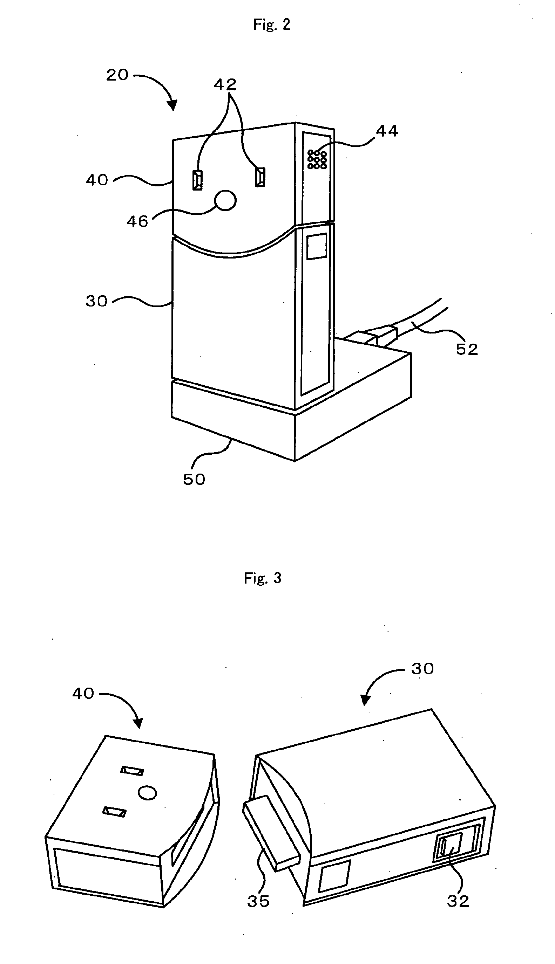

Fig. 1 schematically illustrates the configuration of a commodity and service trading system 10 in one embodiment of the invention. Fig. 2 is a perspective view showing the appearance of a transreceiver 20 used in the commodity and service trading system 10 of the embodiment. Fig. 3 is a perspective view showing the appearance of the transreceiver 20 of Fig. 2 with detachment of an alert device 40 from a transreceiver main body 30.

The commodity and service trading system 10 of the embodiment is constructed to allow trades of commodities and services between users. As shown in Fig. 1, the commodity and service trading system 10 includes multiple transreceivers 20, 20B, and 20C that are operated to directly send and receive transaction data required for trades of commodities and services, a client computer 60 connected to the transreceiver 20, and a Web server 70 that is connected to the client computer 60 via the Internet 72 and sends Web pages (data input forms) for the user's entries of transaction data in response to requests from the client computer 60.

The transreceiver 20 is a portable device that is operated to directly send and receive transaction data to and from the similarly constructed other transreceivers 20B and 20C. The transreceiver 20 includes a transreceiver main body 30, an alert device 40 that is freely attached to and detached from the transreceiver main body 30 and outputs an alert to inform the user of reception of transaction data from another transreceiver 20B or 20C, and a base stand 50 that is freely attached to and detached from the transreceiver main body 30 and receives supply of electric power through a cable 52 connected to the client computer 60 to charge an internal battery (not shown) of the transreceiver main body 30. The transreceiver 20 of this structure may be carried by the user or may be installed at a shop or at a service delivery point.

The transreceiver main body 30 includes a main controller 31 to control the operations of the respective constituents. The transreceiver main body 30 also has a power switch 32 (see Fig. 3) that is provided on a left side face of the transreceiver main body 30, and a memory 33 that stores processing programs and data required for processing (for example, a user data table and a receiving data table described later). The transreceiver main body 30 further has a wireless transreceiver module 34 that is provided with an antenna to transmit and receive the low-intensity electromagnetic wave with a coverage of several meters to several tens meters (for example, radio wave in a predetermined frequency band about 315 MHz), and an interface controller 37 that controls inputs and outputs of a connection terminal 35 having a specific connector form connectable with the alert device 40 and with a specified portable information terminal, such as the cellular phone 80 or a PDA (personal digital assistant), and of a USB (universal serial bus) connection terminal 36 connectable with the client computer 60.

As shown in Figs. 2 and 3, the alert device 40 has two LEDs 42 on its front face and an alarm 44 on its upper right side face. A surrounding area of the alarm 44 on the alert device 40 has multiple through holes provided for clear sound transmission. A communication button 46 is located below the two LEDs 42 on the front face of the alert device 40 to establish data communication with the client computer 60 via an infrared communication port (not shown) provided on the top face of the alert device 40.

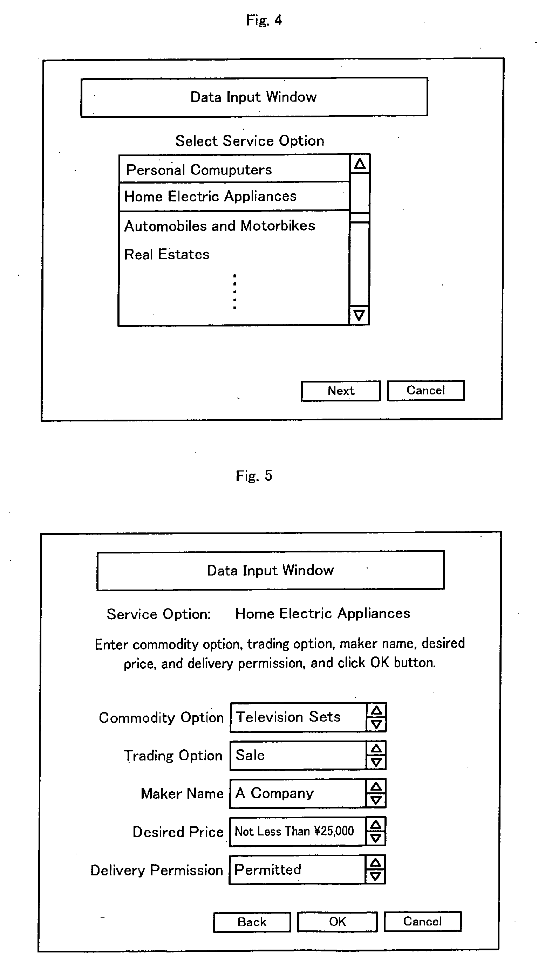

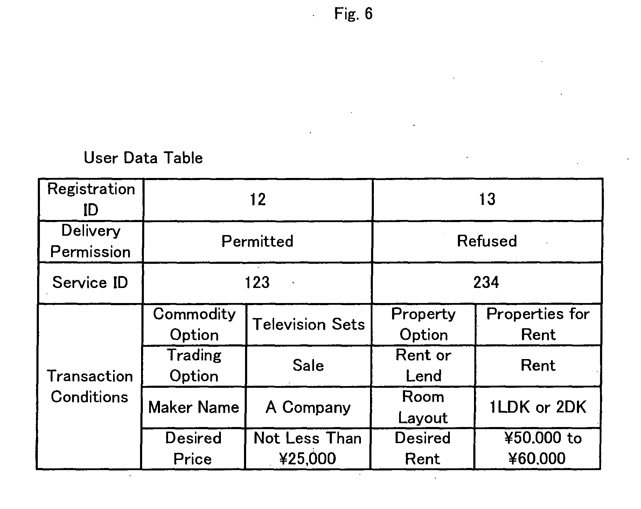

The client computer 60 is constructed as a general-purpose computer with a known browser 62 installed therein. The client computer 60 accepts the user's entry of transaction data on a data input form, which is sent as a Web page from the Web server 70, and registers the accepted transaction data in the form of a user data table into the memory 33 of the transreceiver 30 via the cable 52. Fig. 4 shows one example of the data input form sent from the Web server 70. The client computer 60 receives the data input form of Fig. 4 from the Web server 70 and waits for the user's selection of a desired service option and a subsequent click of a 'Next' button. The client computer 60 then sends the user's selection of the service option to the Web server 70. The Web server 70 receives the user's selection of the service option, generates a data input form in a specific format corresponding to the selected service option, and sends the corresponding data input form to the client computer 60. Fig. 5 shows a data input form generated by the Web server 70 and sent to the client computer 60 when the user's selection is a service option 'Home Electric Appliances'. The data input form generated in response to the selection of the service option 'Home Electric Appliances' includes, as transaction conditions, a 'commodity option box' for entry of a desired commodity option, for example, television sets, refrigerators, or microwave ovens, a 'trading option box' for selection of either purchase or sale as a desired trading option, a 'maker name box' for entry of a desired maker name of the commodity, a 'desired price box' for entry of a desired price for purchase or sale of the commodity, and a 'delivery permission box' for selection of either a permission or a refusal for delivery of transaction data. The client computer 60 receives this data input form of Fig. 5 from the Web server 70 and waits for the user's entries in the respective boxes and a subsequent click of an 'OK' button. The client computer 60 then writes the entered data into the memory 33 of the transreceiver 30 for registry of the transaction data in the user data table. Fig. 6 shows one example of registry in the user data table. Data to be registered in the user data table include a 'registration ID' for identifying each registered transaction data from other transaction data, a 'delivery permission', a 'service ID' for identifying the selected service option and specifying the format for entry of the transaction conditions, and 'transaction conditions'. When the selected service option is 'Home Electric Appliances', the transaction conditions include the 'commodity option', the 'trading option', the 'maker name', and the 'desired price' as mentioned above.

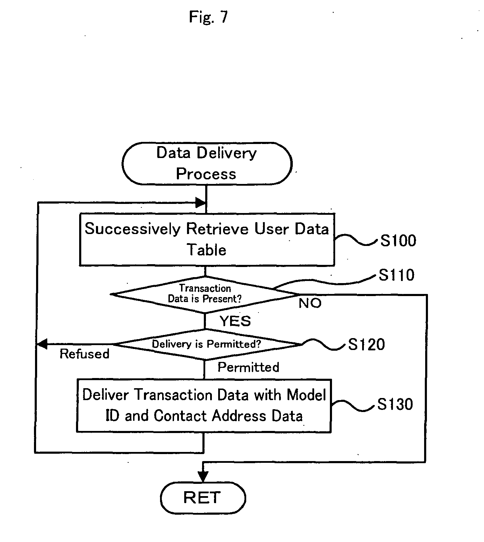

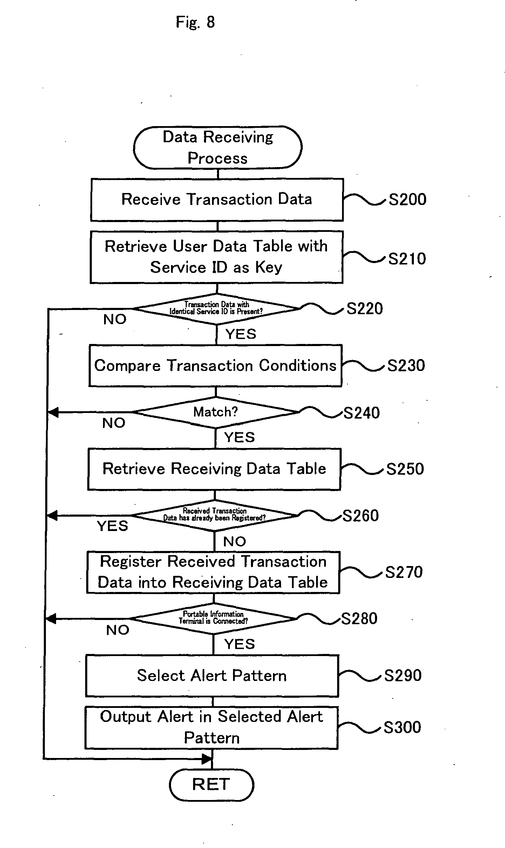

The description regards the operations of the transreceiver 20 of the embodiment constructed as explained above. Fig. 7 is a flowchart showing a data delivery process executed by the main controller 31 of the transreceiver 20. Fig. 8 is a flowchart showing a data receiving process executed by the main controller 31 of the transreceiver 20. The data delivery process is performed repeatedly at preset time intervals, for example, at every several seconds. The data receiving process continuously stands by for reception of transaction data and is activated when the wireless transreceiver module 34 receives transaction data delivered from another transreceiver 20B or 20C. The data delivery process is thus performed in parallel with the data receiving process that continuously stands by for reception of transaction data.

In the data delivery process of Fig. 7, the main controller 31 successively retrieves the user data table (step S100) and identifies the presence of any unprocessed transaction data or the user's newly entered transaction data as target transaction data for delivery in the retrieved user data table (step S110). When no unprocessed transaction data is present in the user data table, there is no data to be delivered. The processing flow thus immediately terminates the data delivery process. When any unprocessed transaction data is present as the target transaction data for delivery in the user data table, on the other hand, the main controller 31 refers to the 'delivery permission' item of the transaction data in the user data table and determines whether delivery of the transaction data is permitted or refused (step S120). Upon the permission for delivery of the transaction data, the main controller 31 controls the wireless transreceiver module 34 to deliver the transaction data with a model ID of the transreceiver 20 and the user's contact address data stored in the memory 33 in advance (step S130). The processing flow then goes back to step S100 to continue the retrieval of the user data table. The user's contact address data may be, for example, the user's telephone number or email address. The user's contact address data is entered in an input data form (not shown) on the client computer 60 and is registered into the memory 33 of the transreceiver 20. Upon the refusal for delivery of the transaction data, on the other hand, the processing flow goes back to step S100 without delivery of the transaction data to continue the retrieval of the user data table. The processing flow repeats the processing of steps S100 to S130 and terminates the data delivery process upon identification of the absence of any unprocessed transaction data in the user data table at step S110. This delivery processing allows delivery for only the transaction data with the setting of 'permitted' in the 'delivery permission' item among the transaction data registered in the user data table. This arrangement effectively prevents delivery of transaction data to the unspecified number of people against the user's intention.

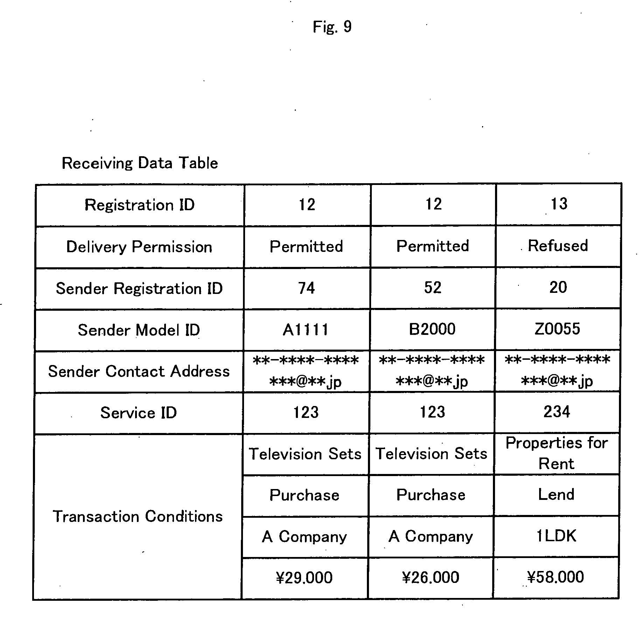

In the data receiving process of Fig. 8, the main controller 31 receives transaction data (step S200) and retrieves the user data table with the service ID included in the received transaction data as a key (step S210) to find any transaction data having the identical service ID with that of the received transaction data in the user data table (step S220). When the user data table has no transaction data with the identical service ID, it is determined that there is no commodity or service suitable for the user's desired transaction. The processing flow thus immediately exits from the data receiving process. When the user data table has any transaction data with the identical service ID, on the other hand, the main controller 3.1 compares the 'transaction conditions' in the received transaction data with the 'transaction conditions' in the transaction data registered in the user data table (step S230) and specifies the matching of these 'transaction conditions' (step S240). In the illustrated example of Fig. 6, the transaction data registered in the user data table has the service ID '123' representing the home electric appliances, and the commodity option 'television sets', the trading option 'sale', the maker name 'A company', and the desired price 'not less than ¥25, 000' as the 'transaction conditions'. It is here assumed that the received transaction data has the service ID '123' and the commodity option 'television sets', the trading option 'purchase', the maker name 'A company', and the desired price '¥29,000' as the 'transaction conditions'. In this case, the received transaction data and the registered transaction data have the identical service ID '123'. An affirmative answer is accordingly given at step S220. According to the comparison between the 'transaction conditions' of the received transaction data and the registered transaction data, the 'commodity option' and the 'maker name' are identical as 'television sets' and 'A company'. The 'trading option' is 'purchase' in the received transaction data and 'sale' in the registered transaction data, which mean matching. The desired price for purchase is '¥29,000', which satisfies the desired price for sale of 'not less than ¥25,000'. It is accordingly determined that the transaction conditions of the registered transaction data match with the transaction conditions of the received transaction data. An affirmative answer is accordingly given at step S240. When the received transaction data mismatches with the transaction data registered in the user data table, the main controller 31 specifies failed trading and exits from the data receiving process. When the received transaction data matches with the transaction data registered in the user data table, on the other hand, the main controller 31 retrieves a receiving data table (step S250) and determines whether any transaction data identical with the received transaction data has already been registered in the receiving data table (step S260). In the presence of the identical transaction data in the receiving data table, duplicate registry of the identical transaction data is unnecessary. The processing flow thus terminates the data receiving process without registry of the received transaction data. In the absence of the identical transaction data in the receiving data table, on the other hand, the received transaction data is registered into the receiving data table (step S270). One example of registry in the receiving data table is shown in Fig. 9. The transaction data registered in the receiving data table has a 'registration ID' of corresponding transaction data registered in the user data table, a 'sender registration ID' as a registration ID of a sender of the registered transaction data, a 'sender model ID' as a model ID of the sender of the registered transaction data, a 'sender contact address' as a contact address of the sender of the registered transaction data, the 'service ID', and the 'transaction conditions'.

After registry of the transaction data into the receiving data table, the main controller 31 determines whether the alert device 40 or the cellular phone 80 is connected with the transreceiver main body 30 (step S280). In the case of connection of either the alert device 40 or the cellular phone 80, the main controller 31 selects an alert pattern (step S290) and outputs an alert in the selected alert pattern (step S300). The processing flow then terminates the data receiving process. In the course of registry of the transaction data in the form of the user data table into the memory 33 of the transreceiver main body 30 by the client computer 60, a lighting pattern of the LEDs 42 of the alert device 40, a sound pattern of the alarm 44 of the alert device 40, or a call out pattern of the cellular phone 80 (for example, an audio pattern, a lighting pattern, or a vibrator pattern) is set as the alert pattern in advance in correlation to the 'registration ID' or the 'service ID'. The alert pattern is selectable by specifying the 'registration ID' or the 'service ID'. In the case of connection of the alert device 40 or the cellular phone 80 to the connection terminal 35 of the transreceiver main body 30, an alert may be output in a unique alert pattern intrinsically set for each 'registration ID' or 'service ID'.

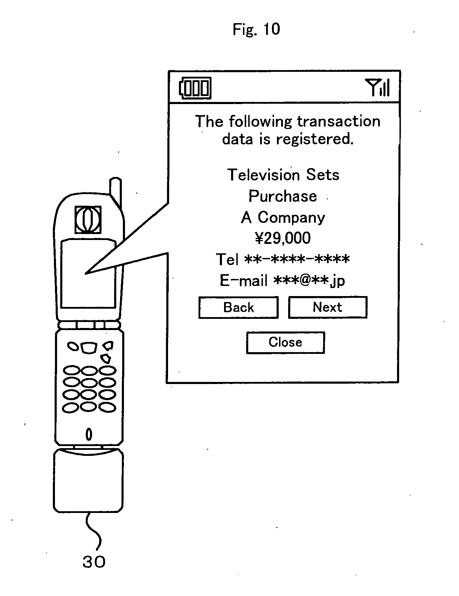

On registry of the transaction data into the receiving data table, the cellular phone 80 or the personal digital assistant connecting with the transreceiver main body 30 may be operated to display and check the content of the transaction data registered in the receiving data table on its monitor screen. The client computer 60 connecting with the transreceiver main body 30 may also be operated to make access to the memory 33 of the transreceiver main body 30 and check the content of the transaction data registered in the receiving data table. Fig. 10 shows display of the content of the transaction data on the monitor screen of the cellular phone 80.

In the commodity and service trading system 10 of the embodiment described above, the client computer 60 registers transaction data regarding trades of commodities and services in the form of the user data table into the memory 33 of the transreceiver main body 30. The transreceiver 20 delivers transaction data registered in the user data table to the other transreceivers 20B and 20C, in parallel with receiving transaction data delivered from the other transreceivers 20B and 20C. When the received transaction data has the identical 'service ID' and the matching 'trading conditions' with those of the transaction data registered in the user data table, the transaction data is registered in the form of the receiving data table into the memory 33 of the transreceiver main body 30. This arrangement enables parallel and direct transmission and reception of the relevant transaction data, thus ensuring the smooth trading of a commodity or a service. Data delivery is allowed for only the transaction data with the setting of the 'permitted' delivery among the transaction data stored in the user data table. This arrangement effectively prevents delivery of the transaction data to the unspecified number of people against the user's intention. When the transaction data received from another transreceiver 20B or 20C has already been registered in the receiving data table, registry of the received transaction data is omitted. This arrangement effectively prevents duplicate registry of the same transaction data in the receiving data table; thus saving the capacity of the memory 33.

In the commodity and service trading system 10 of the embodiment, in response to registry of the received transaction data into the receiving data table, an alert is output to the alert device 40 or the cellular phone 80 connecting with the connection terminal 35 of the transreceiver main body 30. This promptly informs the user of registry of the transaction data. The alert is output in a unique alert pattern intrinsically set for the registration ID or the service ID of the transaction data that is registered in the user data table and corresponds to the received transaction data. Such alert output enables the user to roughly identify the registered transaction data.

In the commodity and service trading system 10 of the embodiment, the memory 33 of the transreceiver 20 storing the user data table and the receiving data table corresponds to the data storage module of the invention. The wireless transreceiver module 34 is equivalent to the data transmitting and receiving module of the invention. The main controller 31 executing the data delivery process of Fig. 7 and the data receiving process of Fig. 8 corresponds to the transmit-receive control module and the transaction data registration module of the invention.

In the commodity and service trading system 10 of the embodiment, the description regards the sales transaction of the 'home electric appliances' as a trade of commodity or service. This is, however, not restrictive in any sense, the description is applicable to trades of any commodities and services, for example, sales transactions of automobiles and motorbikes, personal computers, and furniture, rent and sales transactions of real estates, and rent transactions of parking places.

In the commodity and service trading system 10 of the embodiment, the client computer 60 receives the data input form from the Web server 70 via the Internet 72, accepts the user's entry of transaction data on the received data input form, and registers the received transaction data in the form of the user data table into the memory 33 of the transreceiver main body 30. Reception of the data input form from the Web server 70 is, however, not essential, but the data input form may be stored in advance in the client computer 60.

In the commodity and service trading system 10 of the embodiment, only the transaction data with the setting of 'permitted' in the 'delivery permission' item among the transaction data registered in the user data table are specified as the object of data delivery. One possible modification may deliver all the transaction data registered in the user data table. In this modification, the 'delivery permission' item is omitted from the user data table.

In the commodity and service trading system 10 of the embodiment, among the transaction data received from the other transreceivers 20B and 20C, only the transaction data having the 'transaction conditions' perfectly matching with the ' transaction conditions' of the transaction data registered in the user data table is registered in the receiving data table. One possible modification may additionally register transaction data having partly mismatching 'transaction conditions', into the receiving data table. For example, transaction data having a little difference in the 'desired price' item may be registered in the receiving data table.

In the commodity and service trading system 10 of the embodiment, the alert is output in the unique alert pattern intrinsically set for each 'registration ID' or 'service ID' of the transaction data that is registered in the user data table and corresponds to the transaction data received from another transreceiver20B or 20C. One possible modification may output the alert in a fixed alert pattern, regardless of the 'registration ID' or the 'service ID'. Another possible modification may select an alert pattern according to a different selection factor other than the 'registration ID' or the 'service ID' and output the alert in the selected alert pattern.

The description of the embodiment regards the commodity and service trading system 10. The technique of the invention is also actualized by the transreceiver 20 used in the commodity and service trading system 10 of the embodiment or by a transmitter specialized in only transmission functions of the transreceiver 20 or a receiver specialized in only receiving functions of the transreceiver 20.

The embodiment discussed above is to be considered in all aspects as illustrative and not restrictive. There may be many modifications, changes, and alterations without departing from the scope or spirit of the main characteristics of the present invention. The scope and spirit of the present invention are indicated by the appended claims, rather than by the foregoing description.

## Claims

1. A transreceiver portably used in a commodity and service trading system that allows transmission and reception of transaction data regarding a trade of commodity or service between multiple transreceivers, the transreceiver comprising:
a data storage module that stores data including a transreceiver user's transaction data;
a data transmitting and receiving module that utilizes electromagnetic wave in a predetermined frequency band to send and receive data; and
a transmit-receive control module that controls the data transmitting and receiving module to enable transmission of the transreceiver user's transaction data stored in the data storage module to another transreceiver, in parallel with reception of another transreceiver user's transaction data that is sent from the another transreceiver and is related to the transreceiver user's transaction data stored in the data storage module.

2. The transreceiver in accordance with claim 1, wherein the data storage module stores at least trade option data representing a commodity option or a service option as an object trade and condition data representing transaction conditions required for the object trade, as the transreceiver user's transaction data,
the transreceiver further having:
a transaction data registration module that registers the another transreceiver user's transaction data received from the another transreceiver by means of the data transmitting and receiving module, into the data storage module, when any at least partly matching transaction data having identical trade option data and at least partly matching condition data with those of the another transreceiver user's transaction data is present among the transreceiver user's transaction data stored in the data storage module.

3. The transreceiver in accordance with claim 2, wherein upon previous registration of the another transreceiver user's transaction data in the data storage module, the transaction data registration module does not make duplicate registration of the another transreceiver user' s transaction data, even when any at least partly matching transaction data having identical trade option data and at least partly matching condition data with those of the another transreceiver user' s transaction data is present among the transreceiver user's transaction data stored in the data storage module.

4. The transreceiver in accordance with claim 2, the transreceiver further having:
an information module that notifies the transreceiver user of registration of the another transreceiver user's transaction data by the transaction data registration module.

5. The transreceiver in accordance with claim 4, wherein the information module notifies the transreceiver user of registration of the another transreceiver user's transaction data in a unique notification pattern intrinsically set for each of the transreceiver user's stored transaction data corresponding to the another transreceiver user's transaction data received from the another transreceiver as a registry object or for trade option data of the each stored transaction data.

6. The transreceiver in accordance with claim 2, the transreceiver further having:
a connection module that is connectable with a predetermined portable device to display content of the another transreceiver user's transaction data registered by the transaction data registration module, on a monitor screen of the predetermined portable device.

7. The transreceiver in accordance with claim 1, wherein the data storage module stores the transreceiver user's transaction data with setting of either a permission or a refusal for data transmission, and
the transmit-receive control module sends only transaction data with the setting of a permission for data transmission among the transreceiver user's transaction data stored in the data storage module.

8. A commodity and service trading system that allows transmission and reception of transaction data regarding a trade of commodity or service between multiple transreceivers,
each of the multiple transreceivers having: a data storage module that stores data including a transreceiver user's transaction data; a data transmitting and receiving module that utilizes electromagnetic wave in a predetermined frequency band to send and receive data; and a transmit-receive control module that controls the data transmitting and receiving module to enable transmission of the transreceiver user's transaction data stored in the data storage module to another transreceiver, in parallel with reception of another transreceiver user's transaction data that is sent from the another transreceiver and is related to the transreceiver user's transaction data stored in the data storage module,
the commodity and service trading system comprising:
a server that manages an input form for a user's entry of transaction data; and
a client computer that is connected with the server via a network, receives the input form from the server, accepts the user's entry of transaction data on the received input form, and stores the accepted transaction data into the data storage module of the transreceiver.

9. The commodity and service trading system in accordance with claim 8, wherein the data storage module of the transreceiver stores at least trade option data representing a commodity option or a service option as an object trade and condition data representing transaction conditions required for the object trade, as the transreceiver user's transaction data, and
the transreceiver further has a transaction data registration module that registers the another transreceiver user's transaction data received from the another transreceiver by means of the data transmitting and receiving module, into the data storage module, when any at least partly matching transaction data having identical trade option data and at least partly matching condition data with those of the another transreceiver user's transaction data is present among the transreceiver user's transaction data stored in the data storage module.

10. The commodity and service trading system in accordance with claim 8, wherein the data storage module of the transreceiver stores the transreceiver user's transaction data with setting of either a permission or a refusal for data transmission, and
the transmit-receive control module of the transreceiver sends only transaction data with the setting of a permission for data transmission among the transreceiver user's transaction data stored in the data storage module.

11. A transmitter portably used in a commodity and service trading system that allows transmission and reception of transaction data regarding a trade of commodity or service between the transmitter and a receiver,
the transmitter having: a data storage module that stores data including a transmitter user's transaction data; a data transmitting module that utilizes electromagnetic wave in a predetermined frequency band to send data; and a transmit control module that controls the data transmitting module to send the transmitter user's transaction data stored in the data storage module to the receiver at a predetermined timing,
the receiver having: a data storage module that stores data including a receiver user's transaction data; a data receiving module that receives the data sent on the electromagnetic wave in the predetermined frequency band; a receive control module that controls the data receiving module to receive the transmitter user's transaction data sent at the predetermined timing by the transmitter; and a transaction data registration module that registers the transmitter user's received transaction data into the data storage module of the receiver, when the transmitter user's received transaction data is related to any of the receiver user' s transaction data stored in the data storage module of the receiver.

12. A receiver portably used in a commodity and service trading system that allows transmission and reception of transaction data regarding a trade of commodity or service between the transmitter and a receiver,
the transmitter having: a data storage module that stores data including a transmitter user's transaction data; a data transmitting module that utilizes electromagnetic wave in a predetermined frequency band to send data; and a transmit control module that controls the data transmitting module to send the transmitter user's transaction data stored in the data storage module to the receiver at a predetermined timing,
the receiver having: a data storage module that stores data including a receiver user's transaction data; a data receiving module that receives the data sent on the electromagnetic wave in the predetermined frequency band; a receive control module that controls the data receiving module to receive the transmitter user's transaction data sent at the predetermined timing by the transmitter; and a transaction data registration module that registers the transmitter user's received transaction data into the data storage module of the receiver, when the transmitter user's received transaction data is related to any of the receiver user' s transaction data stored in the data storage module of the receiver.
